# FASCICULE DE BREVET EUROPEEN

(11) **EP 4 155 567 B1**
(45) Date de publication et mention de la délivrance du brevet: **25.06.2025**
(21) Numéro de dépôt: 22197045.2
(22) Date de dépôt: 22.09.2022
(51) Int. Cl.: F16D 3/84, F16D 3/223, F16D 3/227

(54) **BAGUE DE RÉTENTION DE BILLES D'UN ACCOUPLEMENT À BILLES AVEC UN SOUFFLET D'ÉTANCHÉITÉ**
ANSCHLAGRING FÜR DIE KUGELN EINES KUGELGLEICHLAUFGELENKS MIT EINEM DICHTUNGSBALG
BALL RETENTION RING OF A BALL TYPE CONSTANT VELCITY JOINT PROVIDED WITH A SEALING BELLOWS

(30) Priorité: 23.09.2021 FR 2110029
(43) Date de publication de la demande: 29.03.2023
(73) Titulaire: Delmon Group, 24121 Terrasson - Lavilledieu (FR)
(72) Inventeur: SKIERA, Jean François, 58340 CERCY-LA-TOUR (FR); BERNARD, Christophe, 19600 SAINT PANTALEON DE LARCHE (FR)
(74) Mandataire: Ipside

(56) Documents cités:
- WO-A1-2008/108306
- WO-A1-2009/075603
- DE-A1- 2 927 648
- DE-A1- 3 820 449
- DE-U1- 202013 009 221
- KR-A- 20130 104 407
- KR-A- 20130 135 524

## Description

### DOMAINE TECHNIQUE DE L'INVENTION

Le domaine de l'invention est celui des joints de transmission, en particulier des joints de transmission.

Plus précisément, l'invention concerne une bague de rétention de billes d'un joint de transmission adaptée pour être montée sur une extrémité d'un soufflet de protection du joint de transmission.

L'invention trouve notamment des applications dans le domaine de l'automobile, en particulier dans la transmission des roues motrices d'un véhicule automobile, et plus généralement dans le cadre de la transmission de mouvement et d'effort entre des arbres formant un angle entre eux.

### ÉTAT DE LA TECHNIQUE

Il est connu de l'art antérieur des techniques de rétention de billes de joint de transmission à billes, en particulier pour des joints de transmission de type Rzeppa.

Les joints de transmission à billes sont généralement utilisés pour la transmission de rotation entre deux arbres formant un angle, qui est souvent variable.

Les joints de transmission à billes sont généralement constitués d'une pièce appelée bol, dans laquelle est disposé une pièce appelée noix, la noix comportant des rainures accueillant les billes du joint de transmission.

En d'autres termes, les billes sont simplement introduites dans les rainures de la noix. Lorsque les arbres forment un angle de degré important, les billes sont amenées dans des positions extrêmes dans les rainures, pouvant résulter en une sortie de bille hors du joint de transmission.

Il en résulte de nombreux inconvénients, tels une perte de couple transmissible, une usure plus importante du joint de transmission, ainsi que du balourd sur les soufflets de protection généralement montés sur le joint de transmission.

Il est connu de l'art antérieur, par exemple du document WO 2009 075 603 A1, une technique permettant de remédier à ces inconvénients, à savoir la disposition d'une gamelle, par exemple en tôle d'acier, sur le bol, la gamelle formant une butée pour les billes susceptibles de sortir de leur rainure.

Cependant, cette solution peut se traduire par une étape supplémentaire lors du montage du joint de transmission, impliquant une perte importante de temps et un coût financier supplémentaire. Ces conséquences sont particulièrement dommageables dans le domaine automobile, soumis à des contraintes importantes en termes de cadence de production et de coûts.

Le document WO 2008 108 306 A1 décrit une autre solution consistant a renforcer une partie du soufflet par un surmoulage, ce qui rajoute une étape à la fabrication du soufflet.

Ainsi, aucun des systèmes actuels ne permet de répondre simultanément à tous les besoins requis, à savoir de proposer une technique permettant d'éviter qu'une ou plusieurs billes sortent de la rainure du joint de transmission, qui soit simple et peu coûteuse à mettre en œuvre, tout en ne nécessitant aucune étape supplémentaire lors du montage du joint de transmission.

### EXPOSÉ DE L'INVENTION

La présente invention vise à remédier à tout ou partie des inconvénients de l'état de la technique cités ci-dessus.

À cet effet, l'invention vise une bague de rétention de billes d'un joint de transmission, adaptée pour être montée sur une extrémité d'un soufflet de protection du joint de transmission, ladite bague de rétention comportant :
- une portion annulaire déformable , de diamètre constant, adaptée pour recevoir un collier de serrage dudit soufflet sur ledit joint de transmission, et
- une collerette de rétention s'étendant vers l'intérieur de la bague de rétention, de manière à former une butée de rétention des billes du joint de transmission, empêchant la sortie axiale desdites billes hors du joint de transmission.

Grâce à ces dispositions, on réalise le serrage d'un soufflet de protection sur un joint de transmission tout en évitant toute sortie de bille hors du joint de transmission, sans nécessiter d'étapes supplémentaires lors du montage du soufflet sur le joint de transmission. Ainsi, le montage de la bague de rétention et du soufflet de protection est réalisé en une seule opération.

En effet, la portion annulaire déformable est conçue de manière à permettre son serrage en même temps que le serrage du soufflet de protection sur lequel la bague de rétention est disposée, au moyen d'un collier de serrage.

On précise qu'il n'est pas possible de réaliser la fonction de butée seulement en adaptant la forme du soufflet de protection, ce dernier étant trop souple et incapable de retenir les billes susceptibles de sortir du joint de transmission à lui seul. La présence de la collerette de rétention est ainsi essentielle à la bonne retenue des billes, tout en permettant de garder une conception de soufflet simple.

On précise également que généralement, la bague de rétention est livrée préalablement disposée sur un soufflet de protection, l'opérateur en charge du montage n'ayant qu'à fixer les deux éléments prémontés l'une sur l'autre simultanément, ne rajoutant ainsi aucune étape de fixation supplémentaire pour l'utilisateur final du produit.

En résumé, la bague de rétention permet de réaliser une double fonction de maintien du soufflet sur le joint, et de rétention de billes dans le joint, tout en ne nécessitant aucune pièce ou élément supplémentaire par rapport à une bague de maintien usuelle. En d'autres termes, la bague selon l'invention permet à elle seule d'effectuer une rétention de billes. De plus, il est possible d'utiliser un joint usuel avec la bague de rétention, la fonction de rétention étant assurée entièrement par la bague de rétention.

Selon une variante avantageuse, la collerette de rétention possède une portion de surface interne au niveau de laquelle le diamètre de la collerette diminue plus l'on s'éloigne axialement d'un bol du joint de transmission, lorsque la bague est montée sur ledit soufflet.

En d'autres termes, la collerette de rétention possède une portion de surface interne de forme sensiblement tronconique, la forme sensiblement tronconique étant ouverte en direction desdites billes du joint de transmission lorsque la bague est montée sur ledit soufflet. On entend par forme « sensiblement tronconique » une forme inscrite entre deux troncs de cône concentriques, de diamètres du même ordre de grandeur.

De cette manière, les billes font face à une surface globalement tronconique qui les empêche de s'échapper axialement, le diamètre au niveau de la surface tronconique diminuant plus l'on s'éloigne axialement du bol du joint de transmission, c'est à dire de l'emplacement nominal des billes.

En particulier, une telle forme permet d'autoriser un coudage plus important entre les arbres reliés par le joint de transmission, en comparaison à une butée parfaitement verticale. En effet, dans une position extrême, une bille peut se trouver partiellement hors du bol, sans pour autant perdre le contact ni avec le bol, ni avec la noix du joint de transmission. Dans un tel cas, il n'est pas nécessaire que la bille bute immédiatement contre la butée de rétention, mais bute progressivement plus elle sort du bol. Une telle butée progressive est ainsi rendue possible par la forme globalement tronconique. Toutefois, on précise que la forme de rétention peut être adaptée et prendre des formes autres que globalement tronconiques, afin de retenir la bille dans toutes les conditions de fonctionnement de la transmission.

Selon une variante particulière, la collerette de rétention est liée à la portion annulaire par un côté de diamètre supérieur, de manière à former une bague de rétention de diamètre constant, puis décroissant, dans le sens allant de la portion annulaire vers la collerette de rétention.

Ainsi, la bague de rétention comprend deux zones clairement délimitées, une zone de diamètre constant servant au positionnement et à la fixation de la bague sur le soufflet et le bol du joint de transmission, et une zone réalisant une butée de rétention. En particulier, la liaison entre la collerette et la portion annulaire est une liaison de matière, bien qu'il soit envisageable de lier les deux parties par collage, clipsage, vissage, etc.

Selon un mode de réalisation avantageux, la portion annulaire déformable est constituée d'une paroi tubulaire comportant au moins une fente traversante pratiquée selon une direction axiale de la bague, de manière à diminuer la rigidité de ladite portion annulaire. Selon une autre variante, la fente n'est pas traversante, mais forme une rainure diminuant sensiblement la rigidité de la portion annulaire. -

De cette façon, il est possible de disposer et de serrer un collier de serrage sur la portion annulaire, la souplesse de la portion annulaire due à la ou les fentes pratiquées autorisant que le collier enserre à la fois la portion annulaire, le soufflet et le bol du joint de transmission. On comprend qu'un tel serrage serait impossible si la portion annulaire demeurait rigide.

Toute autre solution visant à réduire la rigidité de la portion annulaire est envisageable également, comme la présence d'autres fentes, disposées différemment, ou bien l'utilisation d'un matériau plus souple, pouvant se déformer élastiquement. Dans ce dernier cas de figure, il est envisageable de réaliser la bague de rétention en deux parties de matériau différent, les parties étant liées par la suite par un moyen adapté.

Selon une variante particulière, la paroi tubulaire comporte quatre fentes traversantes réparties régulièrement sur ladite paroi tubulaire.

De cette manière, un compromis satisfaisant entre souplesse et résistance de la portion annulaire est obtenu. Bien entendu, il est possible de pratiquer deux, trois, cinq, six, ou tout autre nombre supérieur de fentes.

Selon un mode de réalisation préférentiel, la portion annulaire déformable comporte, sur sa surface extérieure, des moyens de positionnement, ou de pré-positionnement axial du collier de serrage sur ladite bague de rétention.

Grâce à ces dispositions, le positionnement axial du collier de serrage est réalisé sans effort par l'opérateur chargé du montage, et de plus, un déplacement axial du collier serré peut être évité, évitant par extension une désolidarisation du soufflet de protection et une détérioration du joint de transmission.

Selon un mode de réalisation plus particulier, les moyens de positionnement axial du collier de serrage sur la bague de rétention sont constitués par une rainure annulaire, et/ou deux séries d'oreilles de positionnement saillant radialement de ladite portion annulaire et délimitant une zone annulaire de réception du collier de serrage.

Une telle solution présente l'avantage d'être particulièrement simple à réaliser, en plus de garantir un positionnement aisé du collier lors du montage.

Selon une variante, la bague de rétention est réalisée d'une seule pièce.

Selon une variante particulière, la bague de rétention est en matériau plastique, et préférentiellement en polyamide.

De cette manière, la fabrication de la bague de rétention peut être réalisée simplement, en une seule étape, sans nécessiter d'étape de liaison de pièces rapportées. En particulier, l'utilisation d'un matériau plastique, tel du polyamide, et pouvant être chargé avec un matériau de renforcement, tel de la fibre de verre, autorise la réalisation de la bague de rétention de manière simple et économique par moulage, par exemple, ou par toute autre technique connue.

L'invention a également pour objet un soufflet de protection d'un joint de transmission comportant une bague de rétention selon l'invention, ladite bague de rétention étant disposée sur une extrémité du soufflet de protection.

Selon un mode de réalisation avantageux, le soufflet comporte un arrêt axial de positionnement axial de ladite bague de rétention sous la forme d'un anneau, ou d'au moins deux oreilles de positionnement, ledit arrêt axial de positionnement formant butée axiale avec ladite collerette de rétention.

Ainsi, lorsque la bague de rétention et le soufflet sont conditionnés ensemble, la mise en place du soufflet par l'opérateur chargé du montage du soufflet et de la bague de rétention sur le joint de transmission s'en trouve accélérée. En effet, l'opérateur n'aura aucun effort à fournir pour trouver le bon positionnement de la bague de rétention, cette dernière étant déjà disposée sur l'extrémité du soufflet de protection, et ne peut glisser plus loin sur le soufflet. Ainsi, la bague de rétention est déjà précisément disposée lorsque l'opérateur s'en saisit pour le montage.

Enfin, l'invention a également pour objet un ensemble de transmission comprenant un joint de transmission, pouvant être de type Rzeppa, comportant un bol, sur lequel est fixé un soufflet de protection comportant une bague de rétention selon l'invention, ledit soufflet et ladite bague de rétention étant fixés sur ledit bol au moyen d'un collier de serrage.

L'invention est mise en œuvre selon les modes de réalisation et les variantes exposées ci-après, lesquelles sont à considérer individuellement ou selon toute combinaison techniquement opérante.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
- la [Fig 1] est une vue en perspective d'un ensemble de transmission comprenant une bague de rétention selon l'invention,
- la [Fig 2] est une vue en coupe de l'ensemble de transmission de la figure 1, selon un plan passant par deux des fentes traversantes,
- la [Fig 3] est une vue en perspective d'une bague de rétention selon l'invention,
- la [Fig 4] est une vue d'un côté de la bague de rétention de la figure 3.

### DESCRIPTION DÉTAILLÉE DE L'INVENTION

La présente description est donnée à titre non limitatif, chaque caractéristique d'un mode de réalisation ou variante pouvant être combinée à toute autre caractéristique de tout autre mode de réalisation ou variante de manière avantageuse.

On note, dès à présent, que les figures ne sont pas à l'échelle.

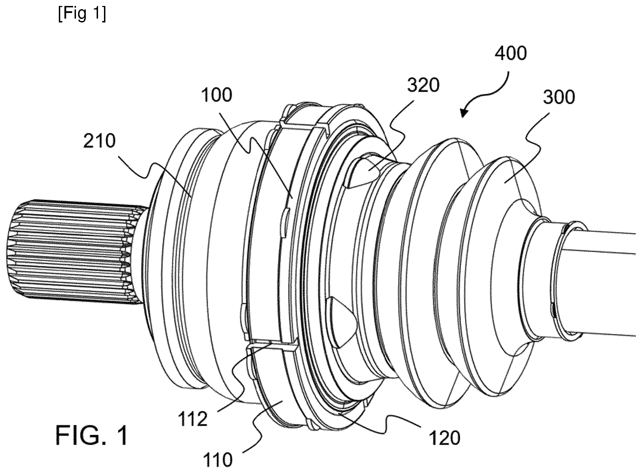

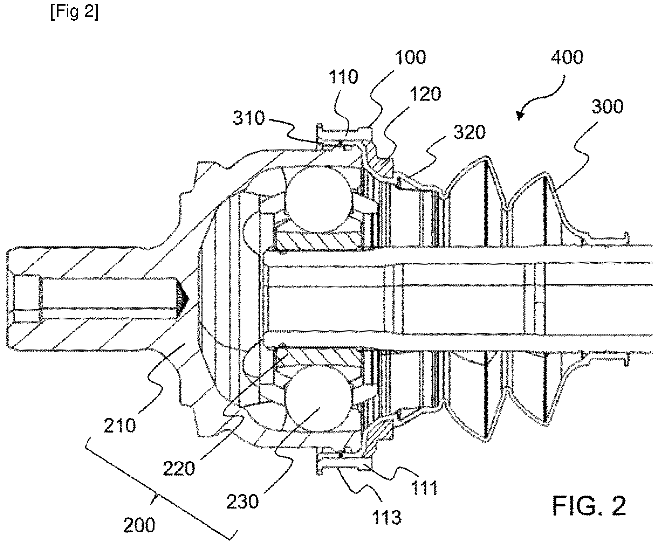

Comme cela est représenté à l'exemple non limitatif des figures 1 et 2, un ensemble de transmission 400 comprend un joint 200 de transmission entre deux arbres, un premier arbre étant solidaire d'un bol 210 du joint 200 de transmission, et un second arbre étant solidaire d'une noix 220 du joint 200 de transmission. Le bol 210 et la noix 220 comprennent des rails ou rainures dans lesquels sont disposées des billes 230. Les billes 230 autorisent ainsi une position coudée des arbres, mais ne laissent pas de degré de liberté en rotation autour des axes des arbres. De cette manière, un mouvement de rotation, et un couple peuvent être transmis par le joint 200 de transmission. Une famille de ce type de joints de transmission est connue sous le nom de « joint Rzeppa », du nom de leur inventeur.

La partie du joint 200 de transmission du côté de la noix 220 est préférentiellement protégée par un soufflet 300 de protection. Un tel soufflet est, de manière connue, une gaine en matériau souple repliée en accordéon, comportant une ouverture de diamètre réduit correspondant au diamètre du second arbre solidaire de la noix 220, et une ouverture de diamètre supérieur correspondant au diamètre extérieur du bol 210. En général, le soufflet 300 de protection est maintenu en position au moyen de colliers de serrages (non représentés) disposés à proximité des ouvertures.

Dans l'exemple de réalisation des figures 1 et 2, une bague 100 de rétention de billes du joint 200 de transmission est disposée sur une extrémité 310 du soufflet 300 de protection, l'extrémité 310 étant celle comportant l'ouverture de diamètre supérieur.

La bague 100 de rétention comporte une portion annulaire 110 déformable, de diamètre D1, adaptée pour recevoir un collier de serrage du soufflet 300 sur le joint 200 de transmission.

La bague 100 de rétention comporte également une collerette 120 de rétention s'étendant vers l'intérieur de la bague 100 de rétention, de manière à former une butée de rétention des billes 230 du joint 200 de transmission, visant à empêcher la sortie axiale des billes 230 hors du joint 200 de transmission.

On comprend, comme cela est visible sur la figure 2, que les billes 230 ne butent pas directement contre la collerette 120 de rétention, mais contre la surface interne du soufflet 300, cependant c'est la collerette 120 de rétention qui permet de réaliser la fonction de butée, par sa rigidité relative, le soufflet 300 lui-même étant trop souple pour empêcher les billes 230 de sortir du bol 210.

Comme cela est visible à la figure 2, la collerette 120 de rétention possède une portion de surface interne de forme globalement tronconique, ouverte en direction des billes 230 du joint 200 de transmission lorsque la bague est montée sur le soufflet 300.

On comprend donc que les billes 230 font face à une surface tronconique qui les empêche de s'échapper axialement, le diamètre au niveau de la surface tronconique diminuant plus l'on s'éloigne axialement du bol 210.

Ainsi, la collerette 120 de rétention présente un côté de diamètre supérieur D1, correspondant au diamètre D1 de la portion annulaire, et un côté de diamètre inférieur D2, qui est inférieur au diamètre supérieur D1.

De cette manière, le diamètre de la collerette 120 de rétention est décroissant dans le sens allant du côté de diamètre supérieur D1 vers le côté de diamètre inférieur D2.

Afin de réaliser une butée, on comprend qu'il est nécessaire que le diamètre inférieur D2 de la collerette 120 soit inférieur au diamètre intérieur du bol 210, c'est-à-dire inférieur au diamètre du cercle auquel sont tangents les fonds des rails ou rainures du bol 210.

On comprend qu'ainsi, les billes 230 qui seraient susceptibles de sortir axialement du bol 210 butent contre la collerette 120 de rétention, préservant l'intégrité du joint 200 de transmission.

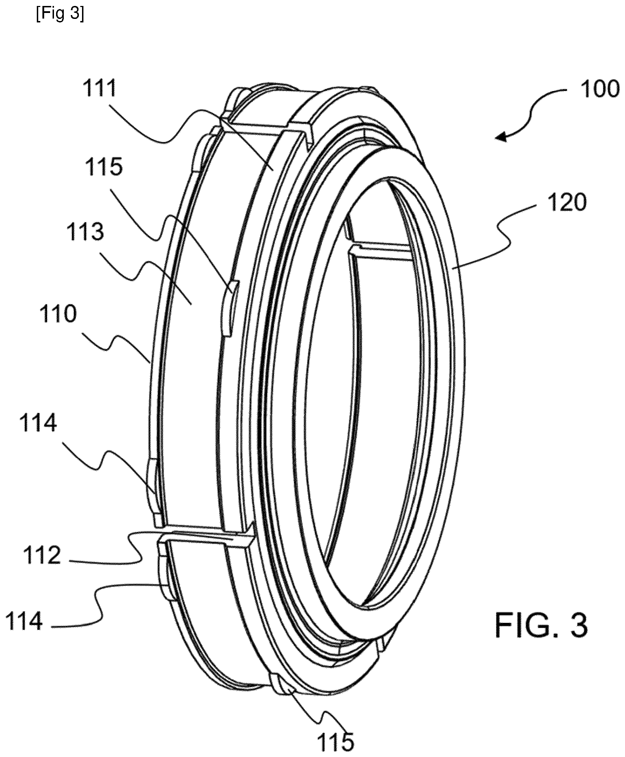

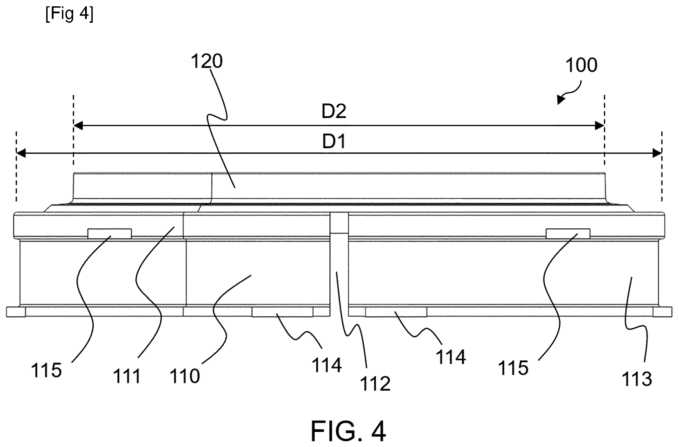

Comme cela est visible sur les figures 3 et 4, la collerette 120 de rétention est lié à la portion annulaire 110 par le côté de diamètre supérieur D1, de manière à former une bague 100 de rétention de diamètre D1, puis décroissant vers le diamètre inférieur D2, dans le sens allant de la portion annulaire 110 vers la collerette 120 de rétention.

En particulier, la liaison est une liaison de matière, c'est-à-dire que la bague 100 de rétention est réalisée d'une seule pièce, bien qu'une réalisation en deux parties soit envisageable (et les deux parties étant ensuite liées entre elles). Le matériau constitutif de la bague 100 de rétention peut être un matériau plastique, comme par exemple du polyamide, pouvant être chargé avec un matériau de renforcement, tel de la fibre de verre.

De cette manière, la bague 100 de rétention est réalisée en une seule étape, par moulage par exemple, à moindre coût.

Comme cela est également visible sur les figures 3 et 4, la portion annulaire 110 déformable est constituée d'une paroi 111 tubulaire comportant au moins une fente 112, pratiquée selon une direction axiale de la bague 100 de rétention, de manière à diminuer la rigidité de la portion annulaire 110.

De cette manière, il est possible de disposer et de serrer un collier de serrage sur la portion annulaire 110, le collier de serrage enserrant à la fois la portion annulaire 110 et le soufflet 300 sur le bol 210. On comprend qu'en l'absence de la ou des fentes 112 traversantes, la rigidité de la portion annulaire 110 empêcherait tout serrage de la portion annulaire.

Préférentiellement, la paroi 111 tubulaire comporte quatre fentes 112 traversantes réparties régulièrement sur la paroi 111 tubulaire, bien qu'il soit envisageable d'en pratiquer un nombre inférieur ou supérieur. La présence de quatre fentes 112 traversantes garanti une bonne souplesse de la portion annulaire 110 tout en évitant de la rendre trop fragile.

De plus, la portion annulaire 110 déformable comporte, sur sa surface extérieure, des moyens de positionnement axial du collier de serrage sur la bague 100 de rétention. En particulier, des moyens de positionnement jouant le rôle de butées peuvent être choisis.

De tels moyens de positionnement axial du collier de serrage sont par exemple constitués par une rainure 113 annulaire pratiquée dans la paroi 111 tubulaire, sur son côté extérieur. On comprend que la largeur de la rainure 113 est au moins égale à la largeur du collier de serrage, de façon à ce que les bords de la rainure 113 délimitent une zone de positionnement du collier de serrage, en formant butée avec ce dernier.

De tels moyens de positionnement axial du collier de serrage sont également constitués (isolément ou en combinaison avec la rainure 113) par une ou deux séries d'oreilles de positionnement saillant radialement de la portion annulaire 110, de façon à former butée avec le collier de serrage. Lorsqu'il n'y a qu'une seule série 114 ou 115, le collier de serrage n'est positionné axialement que dans un seul sens, tandis que lorsqu'il y a deux séries 114 et 115, les séries délimitent une zone annulaire de réception du collier de serrage.

En particulier, les oreilles des séries d'oreilles de positionnement 114 et 115 sont affleurantes au bord de la rainure 113, lorsque ces deux moyens de positionnement sont mis en œuvre conjointement. En d'autres termes, la zone de positionnement du collier de serrage défini par la rainure 113 correspond dans ce cas à la zone annulaire de réception du collier de serrage défini entre les séries d'oreilles de positionnement 114 et 115, résultant en une butée de hauteur plus importante au niveau des oreilles de positionnement, et ainsi en un positionnement axial du collier de serrage plus sûr.

On comprend donc que la bague 100 de rétention remplit son rôle de rétention des billes 230 en étant fixée sur l'extérieur du bol 210 par sa portion annulaire 110, les billes étant retenues par la collerette 120 de rétention. La portion annulaire 110 est fixée elle-même sur le bol 210 mais sert également d'intermédiaire de fixation pour le soufflet 300 de protection. La collerette 120 de rétention quant à elle retient les billes 230 en formant ainsi une butée de rétention.

Avantageusement, le soufflet 300 de protection est adapté de manière à accueillir la bague 100 de rétention, en particulier en ce qui regarde son positionnement axial sur le soufflet 300 de protection.

A cet effet, le soufflet 300 de protection comporte un arrêt axial de positionnement de la bague 100 sous la forme d'au moins deux oreilles 320 de positionnement axial de la bague 100 de rétention, les oreilles 320 de positionnement formant butée axiale avec la collerette 120 de rétention. Bien entendu, les oreilles 320 peuvent prendre toute forme apte à former un arrêt axial, la forme représentée notamment à la figure 1 n'étant pas limitative.

Comme il est visible sur les figures 1 et 2, la bague 100 de rétention est ainsi maintenue sur l'extrémité 310 sans risque de glisser plus loin sur le soufflet 300.

Selon une variante non représentée, le soufflet 300 comporte un arrêt axial de positionnement axial de la bague 100 de rétention sous la forme d'un anneau de positionnement axial.

On précise qu'un tel positionnement axial est particulièrement intéressant lorsque la bague 100 de rétention et le soufflet 300 sont conditionnés ensemble, en vue de leur mise en œuvre dans un ensemble de transmission 400. En effet, l'opérateur chargé du montage du soufflet 300 et de la bague 100 de rétention n'aura aucun effort à fournir pour trouver le bon positionnement de la bague 100 de rétention, le montage s'en trouvant ainsi facilité et accéléré.

Lorsque le collier de serrage a été serré sur la bague 100 de rétention, les oreilles 320 de positionnement ou l'anneau de positionnement axial ne sont plus essentiels pour le positionnement axial, le collier de serrage réalisant un maintien en position axiale et radiale.

## Revendications

1. Bague (100) de rétention de billes (230) d'un joint (200) de transmission à billes, adaptée pour être montée sur une extrémité (310) d'un soufflet (300) de protection du joint de transmission, **caractérisée en ce que** ladite bague de rétention comporte :
• une portion annulaire (110) déformable, de diamètre constant, adaptée pour recevoir un collier de serrage dudit soufflet sur ledit joint de transmission, et
• une collerette (120) de rétention s'étendant vers l'intérieur de la bague de rétention, de manière à former une butée de rétention des billes du joint de transmission, empêchant la sortie axiale desdites billes hors du joint de transmission.

2. Bague (100) de rétention selon la revendication 1, dans laquelle la collerette (120) de rétention possède une portion de surface interne au niveau de laquelle le diamètre de la collerette diminue plus l'on s'éloigne axialement d'un bol (210) du joint (200) de transmission, lorsque la bague est montée sur ledit soufflet (300).

3. Bague (100) de rétention selon l'une quelconque des revendications 1 ou 2, dans laquelle la portion annulaire (110) déformable est constituée d'une paroi (111) tubulaire comportant au moins une fente (112) traversante pratiquée selon une direction axiale de la bague, de manière à diminuer la rigidité de ladite portion annulaire.

4. Bague (100) de rétention selon la revendication 3, dans laquelle la paroi (111) tubulaire comporte quatre fentes (112) traversantes réparties régulièrement sur ladite paroi tubulaire.

5. Bague (100) de rétention selon l'une quelconque des revendications 1 à 4, dans laquelle la portion annulaire (110) déformable comporte, sur sa surface extérieure, des moyens de positionnement axial (113, 114, 115) dudit collier de serrage sur ladite bague de rétention.

6. Bague (100) de rétention selon la revendication 5, dans laquelle les moyens de positionnement axial du collier de serrage sur la bague de rétention sont constitués par une rainure (113) annulaire, et/ou deux séries (114, 115) d'oreilles de positionnement saillant radialement de ladite portion annulaire (110) et délimitant une zone annulaire de réception du collier de serrage.

7. Bague (100) de rétention selon l'une quelconque des revendications 1 à 6, la bague de rétention étant réalisée d'une seule pièce.

8. Bague (100) de rétention selon l'une quelconque des revendications 1 à 7, la bague de rétention étant en matériau plastique, et préférentiellement en polyamide, préférentiellement chargé en fibre de verre.

9. Soufflet (300) de protection d'un joint de transmission comportant une bague (100) de rétention selon l'une quelconque des revendication 1 à 8, ladite bague de rétention étant disposée sur une extrémité (310) du soufflet de protection.

10. Soufflet (300) selon la revendication 9, comportant un arrêt axial de positionnement axial de ladite bague (100) de rétention sous la forme d'un anneau, ou d'au moins deux oreilles (320) de positionnement, ledit arrêt axial de positionnement formant butée axiale avec ladite collerette (120) de rétention.

11. Ensemble de transmission (400) comprenant un joint (200) de transmission à billes, comportant un bol (210), sur lequel est fixé un soufflet (300) de protection comportant une bague (100) de rétention selon l'une quelconque des revendications 1 à 8, ledit soufflet et ladite bague de rétention étant fixés sur ledit bol au moyen d'un collier de serrage.

## Patentansprüche

1. Rückhaltering (100) von Kugeln (230) einer Kugelübertragungsverbindung (200), der geeignet ist, an einem Ende (310) eines Schutzbalgs (300) der Übertragungsverbindung montiert zu werden, **dadurch gekennzeichnet, dass** der Rückhaltering Folgendes aufweist:
• einen verformbaren Ringabschnitt (110) mit konstantem Durchmesser, der geeignet ist, einen Spannring des Balgs an der Übertragungsverbindung aufzunehmen, und
• eine Rückhaltemanschette (120), die sich zum Inneren des Rückhalterings erstreckt, um einen Rückhalteanschlag für die Kugeln der Übertragungsverbindung zu bilden, der das axiale Heraustreten der Kugeln aus der Übertragungsverbindung verhindert.

2. Rückhaltering (100) nach Anspruch 1, wobei die Rückhaltemanschette (120) einen inneren Oberflächenabschnitt aufweist, an dem der Durchmesser der Manschette abnimmt, je weiter man sich axial von einer Trommel (210) der Übertragungsverbindung (200) entfernt, wenn der Ring auf dem Balg (300) montiert ist.

3. Rückhaltering (100) nach einem der Ansprüche 1 oder 2, wobei der verformbare Ringabschnitt (110) eine röhrenförmige Wand (111) mit mindestens einem durchgehenden Schlitz (112) aufweist, der in einer axialen Richtung des Rings ausgebildet wird, um die Steifigkeit des Ringabschnitts zu verringern.

4. Rückhaltering (100) nach Anspruch 3, wobei die Rohrwand (111) vier gleichmäßig über die Rohrwand verteilte durchgehende Schlitze (112) aufweist.

5. Rückhaltering (100) nach einem der Ansprüche 1 bis 4, wobei der verformbare Ringabschnitt (110) an seiner Außenfläche axiale Positionierungsmittel (113, 114, 115) des Spannrings auf dem Rückhaltering aufweist.

6. Rückhaltering (100) nach Anspruch 5, wobei die Mittel zur axialen Positionierung des Spannrings auf dem Rückhaltering aus einer ringförmigen Nut (113) und/oder zwei Reihen (114, 115) von Positionierungsnasen bestehen, die radial aus dem Ringabschnitt (110) hervorstehen und einen ringförmigen Aufnahmebereich des Spannrings begrenzen.

7. Rückhaltering (100) nach einem der Ansprüche 1 bis 6, wobei der Rückhaltering aus einem Stück hergestellt ist.

8. Rückhaltering (100) nach einem der Ansprüche 1 bis 7, wobei der Rückhaltering aus Kunststoffmaterial und vorzugsweise aus Polyamid, vorzugsweise mit Glasfaser gefüllt, besteht.

9. Schutzbalg (300) einer Übertragungsverbindung, der einen Rückhaltering (100) nach einem der Ansprüche 1 bis 8 aufweist, wobei der Rückhaltering an einem Ende (310) des Schutzbalgs angeordnet ist.

10. Balg (300) nach Anspruch 9, der einen axialen Positionierungsanschlag des Rückhalterings (100) in Form eines Rings oder mindestens zwei Positionierungsösen (320) aufweist, wobei der axiale Positionierungsanschlag einen axialen Anschlag mit der Rückhaltemanschette (120) bildet.

11. Übertragungseinheit (400) umfassend eine Kugelübertragungsverbindung (200), die eine Trommel (210) aufweist, an der ein Schutzbalg (300) mit einem Rückhaltering (100) nach einem der Ansprüche 1 bis 8 befestigt ist, wobei der Balg und der Rückhaltering mittels eines Spannrings an der Trommel befestigt sind.

## Claims

1. Ring (100) for retaining balls (230) of a ball transmission joint (200), adapted to be mounted on one end (310) of a bellows (300) for protecting the transmission joint, **characterised in that** said retaining ring includes:
• a deformable annular portion (110), of constant diameter, adapted to receive a collar for clamping said bellows on said transmission joint, and
• a retaining flange (120) extending into the retaining ring, so as to form a stop for retaining the balls of the transmission joint, preventing the axial exit of said balls out of the transmission joint.

2. Retaining ring (100) according to claim 1, wherein the retaining flange (120) has an inner surface portion at which the diameter of the flange decreases on moving axially further away from a bowl (210) of the transmission joint (200), when the ring is mounted on said bellows (300).

3. Retaining ring (100) according to any one of claims 1 or 2, wherein the deformable annular portion (110) is formed of a tubular wall (111) including at least one through slot (112) created along an axial direction of the ring, so as to decrease the rigidity of said annular portion.

4. Retaining ring (100) according to claim 3, wherein the tubular wall (111) includes four through slots (112) evenly distributed along said tubular wall.

5. Retaining ring (100) according to any one of claims 1 to 4, wherein the deformable annular portion (110) includes, on its outer surface, axial positioning means (113, 114, 115) of said clamping collar on said retaining ring.

6. Retaining ring (100) according to claim 5, wherein the axial positioning means of the clamping collar on the retaining ring are formed of an annular groove (113), and/or two series (114, 115) of positioning lugs protruding radially from said annular portion (110) and delimiting an annular area for receiving the clamping collar.

7. Retaining ring (100) according to any one of claims 1 to 6, the retaining ring being made of one piece.

8. Retaining ring (100) according to any one of claims 1 to 7, the retaining ring being made of plastic material, and preferably of polyamide, preferably charged with glass fibre.

9. Bellows (300) for protecting a transmission joint including a retaining ring (100) according to any one of claims 1 to 8, said retaining ring being disposed on one end (310) of the protective bellows.

10. Bellows (300) according to claim 9, including an axial positioning stop of said retaining ring (100) in the shape of a ring, or at least two positioning lugs (320), said axial positioning stop forming an axial stop with said retaining flange (120).

11. Transmission assembly (400) comprising a ball transmission joint (200), including a bowl (210), to which a protective bellows (300) including a retaining ring (100) according to any one of claims 1 to 8 is attached, said bellows and said retaining ring being attached to said bowl by means of a clamping collar.
